# EUROPEAN PATENT APPLICATION

(11) **EP 1 548 038 A1**
(43) Date of publication of application: **29.06.2005**
(21) Application number: 03765354.0
(22) Date of filing: 23.07.2003
(51) Int. Cl.: C08F 214/22

(54) **FLUORORUBBER COPOLYMER**

(30) Priority: 24.07.2002 JP 2002215533
(71) Applicant: Daikin Industries, Ltd., Osaka-shi, Osaka 530-8323 (JP)
(72) Inventor: KITAICHI, Masanori Yodogawa-seisakusho, DAIKIN, Settsu-shi, Osaka 566-8585 (JP); TANAKA, Yoshiki c/o Yodogawa-seisakusho, DAIKIN, Settsu-shi, Osaka 566-8585 (JP); UETA, Yutaka c/o Yodogawa-seisakusho, DAIKIN, Settsu-shi, Osaka 566-8585 (JP); KISHINE, Mitsuru c/o Yodogawa-seisakusho, DAIKIN, Settsu-shi, Osaka 566-8585 (JP)
(74) Representative: HOFFMANN EITLE
(86) International application number: PCT/JP2003/009314
(87) International publication number: WO 2004/009661

(57) **Abstract**

The present invention provides a fluororubber copolymer containing PMVE units, which has excellent chemical resistance and low-temperature resistance. Specifically, the present invention provides a fluororubber copolymer comprising 40 to 70 % by mol of vinylidene fluoride units, 10 to 25 % by mol of tetrafluoroethylene units, and 20 to 35 % by mol of perfluoro(methyl vinyl) ether units, and containing 0.05 to 2 % by weight of iodine based on the copolymer; which is obtained by radical polymerization in the presence of a diiodine compound represented by the following formula (1):

RI₂ (1)

(wherein R is a saturated fluorohydrocarbon group or a chlorofluorohydrocarbon group having 1 to 16 carbon atoms or a hydrocarbon group having 1 to 3 carbon atoms); wherein after vulcanization, TR70 in a TR test according to ASTM D 1329 is -20 to -30°C, and the volume change ratio after immersing at 40°C × 70 hours in a mixture comprising fuel C:methanol = 15:85 weight ratio is 8 to 20 %.

## Description

### TECHNICAL FIELD

The present invention relates to a fluororubber copolymer, specifically a fluororubber copolymer, which has excellent methanol resistance and gives a vulcanized article having excellent low-temperature resistance.

### BACKGROUND ART

Fluororubber composed mainly of vinylidene fluoride (VdF) units is formed into shapes such as O-rings, hoses, stem seals, shaft seals and diaphragms and is widely used in fields such as the automobile industry, the semiconductor industry and the chemical industry, due to the excellent heat resistance, chemical resistance, solvent resistance and fuel oil resistance thereof. Particularly, fluororubber having both chemical resistance and low-temperature resistance is desired.

In order to obtain excellent low-temperature resistance, usually perfluoro(methyl vinyl) ether (PMVE) is used, but obtaining both low-temperature resistance and chemical resistance is difficult. Even in the case that both properties are improved, the difference between TR10 and TR70 in the TR test is large and substantial low-temperature resistance is insufficient. In order to obtain both of these properties, as described in JP-A-7-2947, at least 10 % by mol of fluorovinyl ether, which is expensive, must be copolymerized in the copolymer and this method is impractical as the production costs become high.

In this way, fluororubber containing PMVE units having both chemical resistance and low-temperature resistance has not yet been realized at present.

The object of the present invention is to provide a fluororubber copolymer containing PMVE units, which has excellent chemical resistance and low-temperature resistance.

### DISCLOSURE OF INVENTION

As a result of intensive studies to solve the above problems, a fluorine copolymer obtained by copolymerizing vinylidene fluoride (VdF), tetrafluoroethylene (TFE) and perfluoro(methyl vinyl) ether (PMVE) in a specific composition in the presence of a specific amount of an iodine compound has been found to exhibit excellent methanol resistance and favorable low-temperature resistance.

That is, the present invention relates to a fluororubber copolymer comprising 40 to 70 % by mol of vinylidene fluoride units, 10 to 25 % by mol of tetrafluoroethylene units and 20 to 35 % by mol of perfluoro(methyl vinyl) ether units, and containing 0.05 to 2 % by weight of iodine based on the copolymer, which is obtained by radical polymerization in the presence of a diiodine compound represented by the following formula (1):

RI₂ (1)

(wherein R is a saturated fluorohydrocarbon group or a chlorofluorohydrocarbon group having 1 to 16 carbon atoms or a hydrocarbon group having 1 to 3 carbon atoms); wherein after vulcanization, TR70 in a TR test according to ASTM D 1329 is -20 to -30°C, and the volume change ratio after immersing at 40°C × 70 hours in a mixture comprising fuel C:methanol = 15:85 weight ratio is 8 to 20 %.

The fluororubber copolymer preferably further comprises at most 1.5 % by mol of an iodine-containing vinyl ether unit represented by the following formula (2):

I((CH₂)ₗCF₂CF₂(O)ₘ)ₙ(CF(CF₃)CF₂O)ₒCX=CX₂ (2)

(wherein l is an integer of 0 to 2, m is an integer of 0 to 1, n is an integer of 0 to 5, o is an integer of 0 to 3, X is fluorine or hydrogen).

The volume change ratio is preferably 8 to 18 %, more preferably 8 to 16 %.

### BEST MODE FOR CARRYING OUT THE INVENTION

The copolymer of the present invention comprises VdF, TFE and PMVE. The copolymer composition ratio of these is 40 to 70 % by mol of VdF, 10 to 25 % by mol of TFE and 20 to 35 % by mol of PMVE. The ratio of VdF units is preferably 42 to 68 % by mol, more preferably 45 to 65 % by mol. When the ratio of VdF units is less than 40 % by mol, the glass transition temperature becomes high and when the ratio of VdF units is more than 70 % by mol, the glass transition temperature becomes low, but chemical resistance becomes poor. The ratio of TFE units is preferably 12 to 22 % by mol. When the ratio of TFE units is less than 10 % by mol, chemical resistance decreases and when the ratio of TFE units is more than 25 % by mol, the glass transition temperature becomes high. The ratio of PMVE units is preferably 22 to 32 % by mol. When the ratio of PMVE units is less than 20 % by mol, TR70 in the TR test becomes high and substantial low-temperature resistance is lost. When the ratio of PMVE units is more than 35 % by mol, costs for producing the copolymer become high, as PMVE is expensive.

The method for copolymerizing the above is not particularly limited and examples are suspension polymerization and emulsion polymerization.

Polymerization is conducted by radical polymerization in the presence of a diiodine compound represented by the following formula (1):

RI₂ (1)

(wherein R is a saturated fluorohydrocarbon group or a chlorofluorohydrocarbon group having 1 to 16 carbon atoms or a hydrocarbon group having 1 to 3 carbon atoms) as a chain transfer agent.

Examples of the chain transfer agent represented by formula (1) are diiodomethane, 1,2-diiodomethane, 1,3-diiodoperfluoropropane, 1,4-diiodoperfluorobutane, 1,3-diiodo-2-chloroperfluoropropane, 1,5-diiodo-2,4-dichloroperfluoropentane, 1,6-diiodoperfluorohexane and 1,8-diiodoperfluorooctane. Of these, 1,4-diiodoperfluorobutane is preferable, from the viewpoints that handling properties are favorable due to being liquid at room temperature and chain transferring properties are favorable.

The amount of the chain transfer agent represented by the above formula (1) is not particularly limited, but is preferably at least an amount by which the polymerization rate does not decrease significantly (for example, few hundred ppm based on water). The upper limit is within the range in which the polymerization reaction heat can be removed from the machine surface. Particularly, the amount is preferably 0.05 to 1.5 % by weight based on the fluororubber copolymer.

Also, as other polymerization initiators, for example, ammonium salt, potassium salt or sodium salt of persulfuric acid, perboric acid, perchloric acid, perphosphoric acid or percarbonic acid can be used. The amount thereof is not particularly limited, but is preferably at least an amount by which the polymerization rate does not decrease significantly (for example, few dozen ppm based on water). The upper limit is within the range in which the polymerization reaction heat can be removed from the machine surface.

These polymerization initiators can be added all at once or successively at the beginning of polymerization or can be added continuously.

Furthermore, an emulsifier, a molecular weight adjuster or a pH adjuster can be added. The molecular weight adjuster can be added all at once at the beginning or can be added successively or in portions.

As the emulsifier, a nonionic surfactant, an anionic surfactant or a cationic surfactant can be used and particularly, a fluorine-type nonionic surfactant such as perfluoroammonium octanoate is preferable. The amount (based on water as a polymerization medium) is preferably 500 to 5000 ppm.

Also, a buffering agent can be added accordingly, but the amount thereof is within the range that the effects of the present invention are not lost.

The copolymer preferably contains an iodine-containing vinyl ether unit represented by the following formula (2):

I((CH₂)ₗCF₂CF₂(O)ₘ)ₙ(CF(CF₃)CF₂O)ₒCX=CX₂ (2)

(wherein l is an integer of 0 to 2, m is an integer of 0 to 1, n is an integer of 0 to 5, o is an integer of 0 to 3, X are respectively independent fluorine or hydrogen).

In the formula, from the viewpoints of ease in the synthesis reaction and reactivity when polymerizing, n is more preferably 1 to 5, particularly preferably 1 to 3. In the same way, from the viewpoints of ease in the synthesis reaction and reactivity when polymerizing, o is preferably 0 to 3, particularly preferably 0 to 2.

Specifically, examples are

I(CF₂CF₂O)CF=CF₂,

I(CH₂CF₂CF₂O)CF=CF₂,

ICF=CF₂,

and

I(CH₂CH₂CF₂CF₂)CH=CH₂.

The content of the unit represented by the above formula (2) is preferably at most 1.5 % by mol in the fluororubber copolymer. More preferably, the content is at least 0.003 % by mol and at most 1.5 % by mol. When the content of the above unit is more than 1.5 % by mol, the crosslinking density tends to become too high and as a result, the elongation at break of the molded article tends to decrease.

The copolymer obtained in this way contains 0.05 to 2 % by weight, preferably 0.1 to 1.5 % by weight of iodine. The iodine is introduced into the copolymer by the diiodine compound represented by the above formula (1) and the iodine-containing fluorinated vinyl ether unit represented by the above formula (2), in the case that the copolymer contains this unit. When the iodine in the copolymer is less than 0.05 % by weight, the crosslinking density becomes low and as a result, the molded article cannot exhibit sufficient strength at break. When the iodine in the copolymer is more than 2 % by weight, the molecular weight becomes too high and as a result, problems may be caused in the rubber kneading process.

The fluororubber copolymer of the present invention is mixed with a curing agent and vulcanized.

The curing agent used in the present invention can be selected accordingly depending on the vulcanization type that is employed and a peroxide vulcanization type is preferable.

Examples of the above peroxide vulcanization type are organic peroxides such as α-α'-bis(t-butylperoxy)diisopropylbenzene, 2,5-dimethyl-2,5-di(t-butylperoxy)hexane and dicumylperoxide, but not limited thereto.

The amount of the curing agent is 0.01 to 10 parts by weight, preferably 0.1 to 5 parts by weight, based on 100 parts by weight of the copolymer.

Examples of the accelerator are triallyl cyanurate, triallyl isocyanurate, triacryl formal, triallyl trimellitate, N,N'-m-phenylene bismaleimide, dipropargyl terephthalate, diallyl phthalate, tetraallyl terephthalate amide and triallyl phosphate. Of these, triallyl isocyanurate is particularly preferable.

The amount of the accelerator is 0.01 to 10 parts by weight, preferably 0.1 to 5.0 parts by weight, based on 100 parts by weight of the copolymer.

Also, the usual additives such as a filler, a processing aid, carbon black, an inorganic filler, metal oxides such as zinc oxide and magnesium oxide and metal hydroxides such as calcium hydroxide can be used as long as the effects of the present invention are not lost.

The methods for preparing and vulcanizing are not particularly limited and conventionally known methods can be employed.

With respect to the fluororubber copolymer of the present invention, when vulcanized under the standard composition and standard vulcanization conditions described below, TR70 in a TR test according to ASTM D 1329 is -20 to -30°C and the volume change ratio after immersing at 40°C × 70 hours in a mixture comprising fuel C:methanol = 15:85 weight ratio is 8 to 20 %.

Herein, fuel C refers to a 1:1 mixture of isooctane and toluene.

### (Standard composition)

| | |
|---|---|
| Copolymer | 100 parts by weight |
| Carbon black MT-C | 30 parts by weight |
| Triallyl isocyanurate | 3 parts by weight |
| 2,5-dimethyl-2,5-di(t-butylperoxy)hexane | 1.5 part by weight |
| Zinc oxide | 3 parts by weight |

### (Standard vulcanization conditions)

Press vulcanization: 10 minutes at 160°C
Oven vulcanization: 4 hours at 180°C or 24 hours at 230°C

It is difficult for TR70 to be lower than -30°C in a VdF/TFE/PMVE copolymer and when TR70 is higher than -20°C, substantial low-temperature resistance becomes poor. Preferably, TR70 is at most -20°C and at least -25°C.

It is difficult for the volume change ratio to be lower than 8 % in a VdF fluororubber copolymer and when the volume change ratio is higher than 20 %, the fluororubber copolymer is insufficient as a sealing material for chemicals. Preferably, the volume change ratio is 8 to 18 %, more preferably 8 to 16 %.

### Evaluation methods

### <Compression set>

The standard composition described below is subjected to primary press vulcanization and secondary oven vulcanization under the following standard vulcanization conditions to prepare an O-ring (P-24). The compression set (CS) after primary press vulcanization and the compression set after secondary oven vulcanization are measured according to JIS-K6301 (a sample held at 200°C for 70 hours under 25 % compression and then left for 30 minutes in a constant temperature room of 25°C is measured).

### (Standard composition)

| | |
|---|---|
| Copolymer | 100 parts by weight |
| Carbon black MT-C | 30 parts by weight |
| Triallyl isocyanurate | 3 parts by weight |
| 2,5-dimethyl-2,5-di(t-butylperoxy)hexane | 1.5 part by weight |
| Zinc oxide | 3 parts by weight |

### (Standard vulcanization conditions)

Press vulcanization: 10 minutes at 160°C
Oven vulcanization: 4 hours at 180°C or 24 hours at 230°C

### <Mooney viscosity>

The Mooney viscosity is measured according to ASTM-D1646 and JIS K6300. Measurment instrument: Automatic Mooney Viscometer made by Ueshima Seisakusho
Rotor rotational speed: 2 rpm

### <100 % modulus (M100)>

The above standard composition is subjected to primary press vulcanization and secondary oven vulcanization under the above standard vulcanization conditions to prepare a sheet of 2 mm thickness and the 100 % modulus is measured according to JIS-K6251.

### <Tensile strength and elongation>

The above standard composition is subjected to primary press vulcanization and secondary oven vulcanization under the above standard vulcanization conditions to prepare a sheet of 2 mm thickness and the tensile strength and elongation are measured according to JIS-K6251.

### <Hardness (shore A)>

The above standard composition is subjected to primary press vulcanization and secondary oven vulcanization under the above standard vulcanization conditions to prepare a sheet of 2 mm thickness and the hardness is measured according to JIS-K6253.

### <Vulcanization properties>

The vulcanization curve at 170°C is found in primary press vulcanization using JSR model curastometer II and the minimum viscosity, the maximum viscosity, the induction time and the optimum vulcanization time are found.

### <TR test>

The TR test is conducted according to ASTM D 1329. <Chemical resistance (methanol resistance)>

The above standard composition is subjected to primary press vulcanization and secondary oven vulcanization under the above standard vulcanization conditions to prepare a 2 cm × 2 cm × 2 mm thickness sheet.
M 15: The sheet is immersed at 40°C × 73 hours in a mixture comprising fuel C:methanol = 85:15 weight ratio and the volume change ratio (ΔV) is found.
M85: The sheet is immersed at 40°C × 70 hours in a mixture comprising fuel C:methanol = 15:85 weight ratio and the volume change ratio (ΔV) is found.

### EXAMPLE 1

A 6 liter capacity autoclave equipped with a stirring device was charged with 2 liters of deionized water, 4 g of C₇F₁₅COONH₄ as an emulsifier and 0.18 g of disodium hydrogen phsophate·12 H₂O as a pH adjuster and the system was replaced with nitrogen gas. Thereafter, the temperature was raised to 80°C while stirring at 480 rpm and VdF/TFE/PMVE = 55/4/41 % by mol was injected so that the inner pressure became 0.83 MPa. Then, 2 ml of a 10 mg/ml aqueous solution of ammonium persulfate (APS) was injected by nitrogen gas to initiate polymerization. The pressure decreases as the polymerization reaction progresses and so when the pressure decreased to 0.74 MPa, a monomer mixture adjusted to VdF/TFE/PMVE = 57/13/30 % by mol was injected to repressurize to 0.83 MPa. At this time, 2.4 g of diiodine compound I(CF₂)₄I was injected. While repeating increase and decrease in pressure, 2 ml of the above APS was injected by nitrogen gas every three hours to continue the polymerization reaction. When 686 g of the monomer mixture had been added, unreacted monomers were discharged and the autoclave was cooled to obtain a dispersion having a solid content concentration of 26.7 % by weight. To the dispersion was added a 4 % by weight aqueous solution of aluminum sulfate to conduct coagulation. The obtained coagulate was washed with water and dried to obtain 730 g of a rubbery polymer. The composition of the rubbery polymer measured by ¹⁹F-MNR was VdF/TFE/PMVE = 60/12/28 (% by mol). The iodine content in the rubbery polymer was 0.21 % by weight.

The obtained rubbery polymer was evaluated according to the above evaluation methods. The results are shown in Table 1.

### EXAMPLE 2

The reaction was conducted in the same manner as in Example 1, except that the monomer mixture injected when initiating polymerization was VdF/TFE/PMVE = 40/15/45 (% by mol) and the monomer mixture used for repressurization after the pressure decreased was VdF/TFE/PMVE = 57/20/23 (% by mol), and 691 g of a rubbery polymer was obtained. The composition of the rubbery polymer measured by ¹⁹F-MNR was VdF/TFE/PMVE = 59/18/23 (% by mol). The iodine content in the rubbery polymer was 0.15 % by weight.

The obtained rubbery polymer was evaluated according to the above evaluation methods. The results are shown in Table 1.

### EXAMPLE 3

The reaction was conducted in the same manner as in Example 1, except that the monomer mixture injected when initiating polymerization was VdF/TFE/PMVE = 41/15/44 (% by mol), the monomer mixture used for repressurization after the pressure decreased was VdF/TFE/PMVE = 57/20/23 (% by mol) and 3.2 g of I(CH₂CF₂CF₂O)CF=CF₂, which is iodine-containing fluorinated vinyl ether, was injected when 337 g of the above monomer mixture was added, and 685 g of a rubbery polymer was obtained. The composition of the rubbery polymer measured by ¹⁹F-MNR was VdF/TFE/PMVE/IMI = 53.3/21.6/25.0/0.1 (% by mol). The iodine content in the rubbery polymer was 0.41 % by weight.

The obtained rubbery polymer was evaluated according to the above evaluation methods. The results are shown in Table 1.

### COMPARATIVE EXAMPLE 1

The reaction was conducted in the same manner as in Example 1, except that the monomer mixture injected when initiating polymerization was VdF/TFE/PMVE = 61/11/28 (% by mol), the monomer mixture used for repressurization after the pressure decreased was VdF/TFE/PMVE = 63/21/16 (% by mol) and 4.8 g of diiodine compound I(CF₂)₄I was injected, and 684 g of a rubbery polymer was obtained. The composition of the rubbery polymer measured by ¹⁹F-MNR was VdF/TFE/PMVE = 64/20/16 (% by mol). The iodine content in the rubbery polymer was 0.34 % by weight.

The obtained rubbery polymer was evaluated according to the above evaluation methods. The results are shown in Table 1.

### COMPARATIVE EXAMPLE 2

A commercially available fluororubber copolymer (copolymer composition: VdF/TFE/PMVE = 70/10/20 (% by mol) was used.

This fluororubber copolymer was evaluated according to the above evaluation methods. The results are shown in Table 1.

### COMPARATIVE EXAMPLE 3

A commercially available fluororubber copolymer (copolymer composition: VdF/TFE/PMVE = 57/20/23 (% by mol) was used. This copolymer does not contain iodine.

This fluororubber copolymer was evaluated according to the above evaluation methods. The results are shown in Table 1.

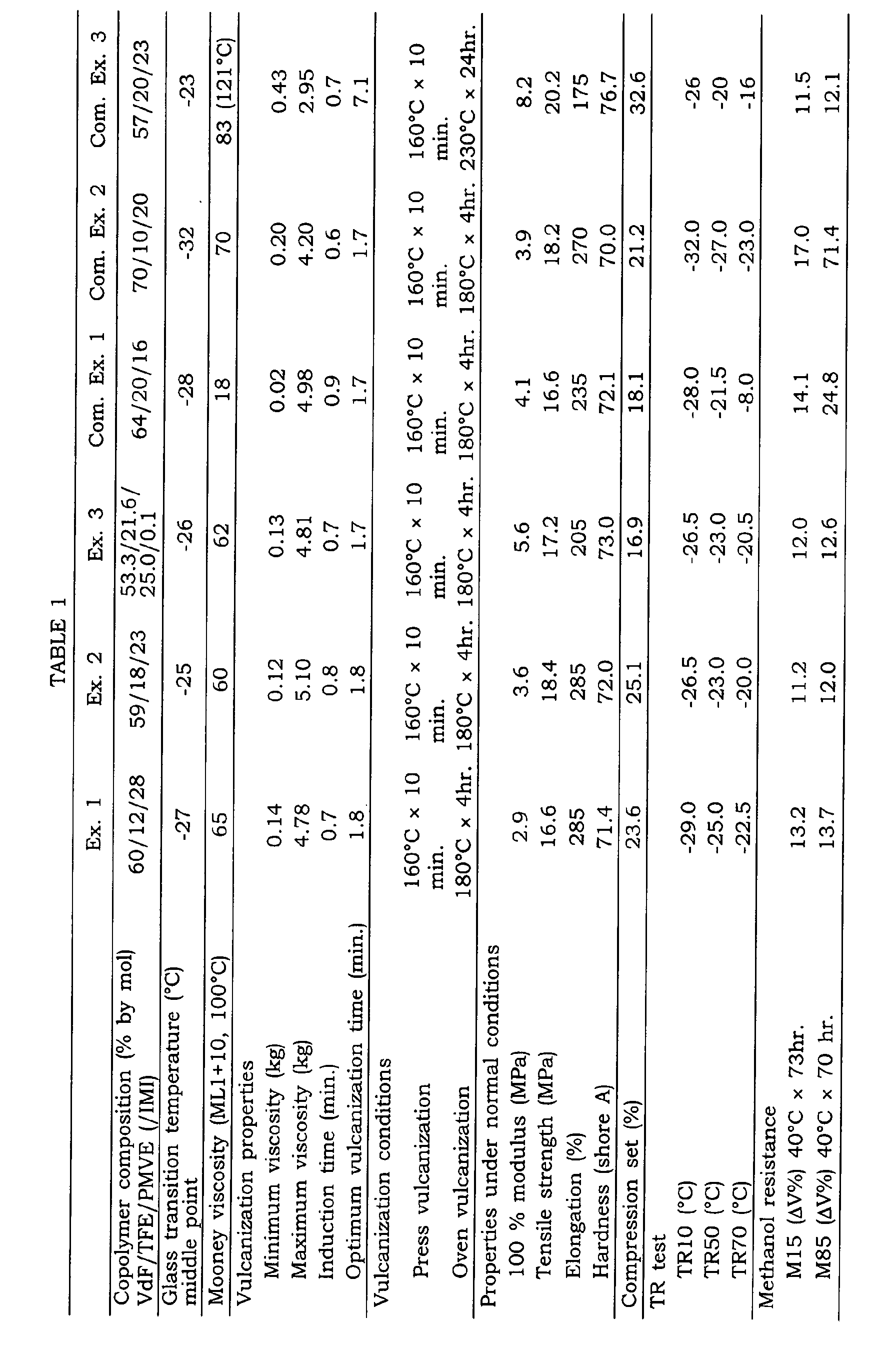

### INDUSTRIAL APPLICABILITY

According to the present invention, a fluororubber copolymer having excellent methanol resistance and low-temperature resistance can be obtained by copolymerizing vinylidene fluoride, tetrafluoroethylene and perfluoro(methyl vinyl) ether in a specific composition in the presence of a specific amount of an iodine compound.

## Claims

1. A fluororubber copolymer comprising
40 to 70 % by mol of vinylidene fluoride units,
10 to 25 % by mol of tetrafluoroethylene units, and
20 to 35 % by mol of perfluoro(methyl vinyl) ether units, and
containing 0.05 to 2 % by weight of iodine based on said copolymer;
obtained by radical polymerization in the presence of a diiodine compound represented by the following formula (1):
RI₂ (1)
(wherein R is a saturated fluorohydrocarbon group or a chlorofluorohydrocarbon group having 1 to 16 carbon atoms or a hydrocarbon group having 1 to 3 carbon atoms);
wherein after vulcanization,
TR70 in a TR test according to ASTM D 1329 is -20 to -30°C, and
the volume change ratio after immersing at 40°C × 70 hours in a mixture comprising fuel C:methanol = 15:85 weight ratio is 8 to 20 %.

2. The fluororubber copolymer of Claim 1, wherein said volume change ratio is 8 to 18 %.

3. The fluororubber copolymer of Claim 1, which further comprises at most 1.5 % by mol of an iodine-containing fluorinated vinyl ether unit represented by the following formula (2):
I((CH₂)ₗCF₂CF₂(O)ₘ)ₙ(CF(CF₃)CF₂O)ₒCX=CX₂ (2)
(wherein l is an integer of 0 to 2, m is an integer of 0 to 1, n is an integer of 0 to 5, o is an integer of 0 to 3, X are respectively independent fluorine or hydrogen).

4. The fluororubber copolymer of Claim 1, wherein said volume change ratio is 8 to 16 %.
